Europäisches Patentamt

European Patent Office

Office européen des brevets

(19)

(11) **EP 1 014 669 A1**

## (12) DEMANDE DE BREVET EUROPEEN

(43) Date de publication:
**28.06.2000 Bulletin 2000/26**

(51) Int Cl.[7]: **H04M 9/08**

(21) Numéro de dépôt: **99402636.7**

(22) Date de dépôt: **22.10.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **28.10.1998 FR 9813838**
**13.11.1998 FR 9814321**

(71) Demandeur: **FRANCE TELECOM**
**exploitant public**
**75015 Paris (FR)**

(72) Inventeurs:
• **Taeger,Wolfgang**
  **D-81673 Munchen (DE)**
• **Le Tourneur, Grégoire**
  **22700 St. Quay-Perros (FR)**

(74) Mandataire: **Maillet, Alain**
**Cabinet Le Guen & Maillet,**
**38, rue Levavasseur,**
**B.P. 91**
**35802 Dinard Cedex (FR)**

(54) **Système acoustique pour la réduction d'écho**

(57) La présente invention concerne un système acoustique du type comportant un moyen de captage du son et un moyen de restitution du son (15) relié à une sortie d'une unité d'application (14) à laquelle est appliqué ledit signal issu dudit moyen de captage à des fins notamment de restitution par ledit moyen de restitution (15). Ledit système est prévu pour réduire l'écho résultant du couplage acoustique entre ledit moyen de captage du son et ledit moyen de restitution.

Selon l'invention, il est caractérisé en ce que ledit moyen de captage du son est constitué d'au moins deux capteurs de son (11, 12, $31_1$ à $31_n$) situés à des distances différentes dudit moyen de restitution (15) et d'une unité de traitement (13) prévue pour exploiter l'amplitude et la phase des signaux issus de chaque capteur de son (11, 12, $33_1$ à $33_n$) afin de délivrer un signal à ladite unité d'application (14) dont le signal d'écho est réduit.

FIG. 1

**Description**

La présente invention concerne un système acoustique pourvu de moyens pour réduire l'écho résultant du couplage acoustique entre son moyen de captage et son moyen de restitution.

Un système acoustique selon l'invention peut être par exemple un système de captage et restitution de sons constitué d'un moyen de captage du son tel qu'un microphone, d'un moyen de restitution du son, tel qu'un haut-parleur, et d'une unité d'application, telle qu'un amplificateur qui en augmentera la puissance pour ensuite le transmettre au moyen de restitution.

Il peut également s'agir une unité téléphonique également constitué d'un moyen de captage du son tel qu'un microphone, d'une unité d'application qui enverra le signal issu du moyen de captage vers une unité téléphonique distante et d'un moyen de restitution prévu pour restituer le signal issu de ladite unité distante.

Dans de tels systèmes, le signal émis par le moyen de restitution peut être capté par le moyen de captage et il en résulte un écho acoustique. Cet écho acoustique se décompose en deux parties essentielles : le couplage direct haut parleur/microphone et la réponse de la salle.

Si la réponse de la salle est en général traitée efficacement par les techniques d'annulation d'écho classique (du fait entre autre du niveau assez faible de cette partie de l'écho), il n'en est pas de même pour le couplage direct, qui résulte à la fois du mode acoustique et des propagations des vibrations, par exemple à travers le boîtier si le système dont il s'agit est un terminal téléphonique. Cette partie d'écho due au couplage direct présente en général une puissance plus importante que la parole locale captée par le moyen de captage (de 6 à 18 dB, soit un coefficient multiplicateur de 8), et entraîne un phénomène d'auto-oscillation généralement nommé "effet Larsen" si aucun traitement adéquat n'est appliqué.

Si l'annulation d'écho permet de traiter peu ou prou cet effet néfaste, une variation de gain conséquente doit être implantée en plus pour éviter le départ en Larsen pendant la phase de convergence de l'annuleur d'écho, mais également ensuite pour prévenir tout problème si le chemin d'écho varie ou dans les moments de double parole.

Pour un terminal téléphonique, le couplage acoustique direct est important dans la mesure où le microphone est placé dans le même boîtier que le haut-parleur. L'écho qui résulte de ce couplage est l'obstacle majeur au bon fonctionnement des postes téléphoniques mains libres.

On a donc cherché à réduire les effets du couplage direct. La distance micro-haut-parleur ne peut pas être modifiée dans des proportions importantes compte tenu de la taille des terminaux individuels. On notera cependant qu'à chaque fois, que la distance est doublée, la puissance de l'écho est divisé par quatre.

Il est par contre possible d'intervenir sur la mécanique du couplage entre le haut-parleur et le microphone. Par exemple, on désolidarise le microphone du boîtier en utilisant des matériaux antivibratoires, tels que des mousses ou du caoutchouc ce qui a pour effet de supprimer ou de diminuer fortement les vibrations engendrées par le haut-parleur et transmise, via le boîtier, au microphone.

Cette solution du découplage mécanique diminue effectivement le couplage par les vibrations, mais s'avère être une solution industriellement chère. Par ailleurs, elle ne réduit pas le couplage acoustique qui peut se révéler important si le microphone est placé relativement près du haut-parleur, ce qui est aujourd'hui la tendance du fait de la mode pour des terminaux de taille réduite.

Une autre solution connue consisterait à utiliser, en parallèle avec le chemin du signal d'écho, un filtre de compensation dont la réponse est inverse de la réponse impulsionnelle du couplage entre le microphone et le haut parleur, couplage tant mécanique qu'acoustique. En théorie, à la sortie du filtre de compensation, le signal en provenance du haut-parleur dû à l'écho est annulé. Cependant, dans la pratique, cette technique est assez pointue et ne donne plus satisfaction si le couplage a changé dans ses caractéristiques, même d'une façon minime, suite par exemple à un démontage/remontage du terminal. Cette technique n'est par ailleurs pas adaptée si la nature des perturbations n'est pas linéaire, c'est-à-dire si elles ne peuvent être modélisées par le produit du signal provenant du haut parleur et d'une fonction linéaire. Qui plus est, le fonctionnement des transducteurs est rarement linéaire, car ils sont généralement sujets à des distorsions et/ou des saturations, qui sont des exemples types de fonctions non linéaires.

Enfin, pour une production en grande série, le couplage sera forcément différent d'un terminal à un autre, du fait par exemple de l'utilisation de haut-parleur ou de microphone légèrement différents, rendant là aussi cette technique de compensation par filtre peu efficace.

Le but de la présente invention est donc de proposer un système acoustique prévu pour réduire l'écho qui résulte du couplage acoustique direct entre son moyen de captage de sons et son moyen de restitution qui permette de résoudre les problèmes évoqués ci-dessus.

A cet effet, un système acoustique selon l'invention est caractérisé en ce que ledit moyen de captage du son est constitué d'au moins deux capteurs de son situés à des distances différentes dudit moyen de restitution et d'une unité de traitement prévue pour exploiter l'amplitude et la phase des signaux issus de chaque capteur de son afin de délivrer un signal à ladite unité d'application dont le signal d'écho est réduit.

Selon une autre caractéristique de l'invention, ladite unité de traitement effectue un filtrage du signal issu de chaque capteur puis une sommation des signaux ainsi filtrés, la réponse impulsionnelle de chaque filtrage associé à un capteur étant définie par une fonction $g_i(t)$ qui est une solution de l'équation suivante :

$$\sum_i \left[ h_i(t) * g_i(t) \right] \approx 0 \text{ pour } i \text{ variant de 1 à } \mathbf{n}$$

où $\mathbf{n}$ est le nombre de capteurs et $h_i(t)$ ($i$ variant de 1 à $\mathbf{n}$) est la réponse impulsionnelle de chaque capteur aux signaux délivrés par ledit moyen de restitution.

Selon une autre caractéristique de l'invention, un des filtrage est défini par une fonction multiplication.

Selon une autre caractéristique de l'invention, la réponse impulsionnelle de chaque capteur aux signaux délivrés par ledit moyen de restitution est déterminée par mesure de la réponse dudit capteur à des signaux émis par ledit moyen de restitution.

Selon une autre caractéristique de l'invention, chaque fonction $g_i(t)$ est déterminée par résolution de ladite équation au moyen d'un algorithme adaptatif

Selon une variante de réalisation, chaque fonction $g_i(t)$ est déterminée par résolution de ladite équation au moyen d'un algorithme des moindres carrés.

Selon une autre caractéristique de l'invention, ledit système comporte deux capteurs dont l'un est plus proche du moyen de restitution que l'autre.

Selon une autre caractéristique de l'invention, le filtrage associé au capteur le plus éloigné du moyen de restitution est défini par une fonction multiplication.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la Fig. 1 est un schéma synoptique d'un moyen de captage d'un système acoustique selon l'invention,
la Fig. 2 est un autre schéma synoptique d'un moyen de captage selon l'invention, dans un premier mode de réalisation de la fonction de filtrage,
la Fig. 3 est un autre schéma synoptique d'un système acoustique selon l'invention, dans un second mode de réalisation de la fonction de filtrage, et
la Fig. 4 est un diagramme illustrant l'efficacité d'un système acoustique selon l'invention.

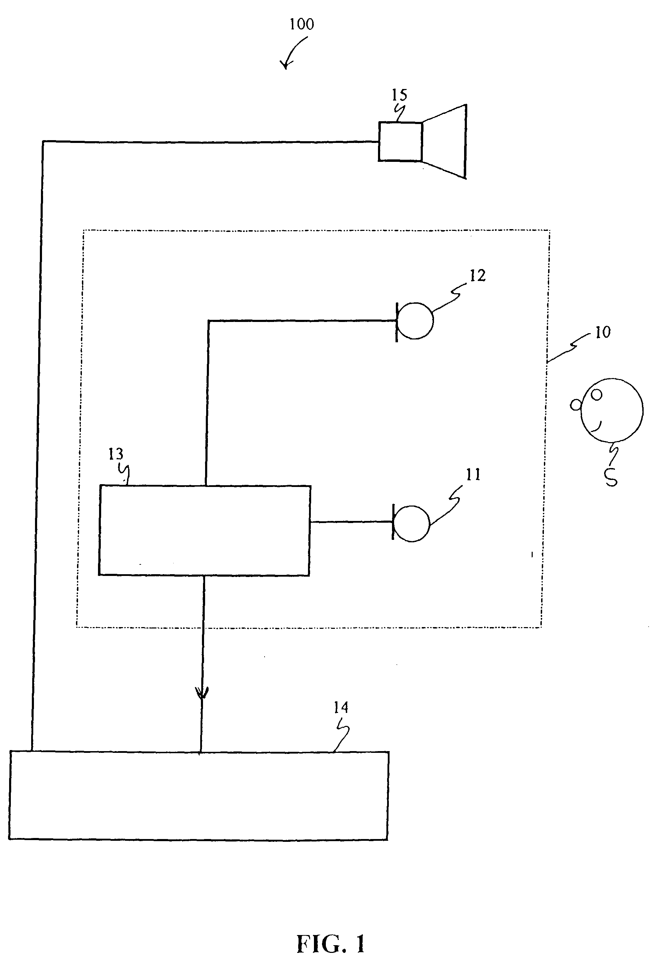

A la Fig. 1, on a représenté un système acoustique 100 dont les moyens de captage de sons 10 sont constitués de deux capteurs de sons 11 et 12, ici constitués de microphones, respectivement reliés à deux entrées d'une unité de traitement 13. L'unité 13 a sa sortie qui est reliée à l'entrée d'une unité d'application 14, par exemple un amplificateur ou une unité téléphonique. Le système 100 comporte encore des moyens de restitution du son 15, ici un haut-parleur, relié à la sortie de ladite unité téléphonique 14. On a également représenté à la Fig. 1, une source sonore S.

Le microphone 11 est le microphone principal qui reçoit le signal utile noté $s(t)$.

Les signaux sonores émis par la source S sont captés par les microphones 11 et 12 délivrant alors des signaux électriques qui sont ensuite traités dans l'unité 13 avant d'être transmis à l'unité d'application 14. Cette dernière est par exemple un amplificateur qui augmentera la puissance des signaux reçus de l'unité 13 et les délivrera au haut-parleur 15 à des fins de restitution. Il peut également s'agir d'une unité téléphonique qui enverra par voie téléphonique ces signaux à un ou plusieurs autres abonnés et qui recevra, par la même voie, des signaux du ou de ces abonnés et les délivrera ensuite au haut-parleur 15 à des fins de restitution.

Selon une caractéristique de l'invention, les deux microphones 11 et 12 sont à des distances différentes du haut-parleur 15, le microphone 12 se trouvant plus proche que le microphone 11. Comme on le verra par la suite, les autres spécifications géométriques, telles que symétrie de révolution, ne sont pas pertinentes pour l'invention.

Selon l'invention, ce sont les informations de phase et d'amplitude des signaux issus des microphones 11 et 12 qui sont traitées dans l'unité de traitement 13.

Selon un premier mode de réalisation de l'invention, ce traitement correspond à une combinaison de ces signaux avec retard du second issu du microphone 12 le plus proche du haut-parleur 15 par rapport au premier issu du microphone principal il. Ce retard, noté $t_e$, correspond au temps de propagation entre les deux microphones 11 et 12 du signal d'écho issu du haut-parleur 15. On démontre ci-après qu'une telle combinaison permet de réduire l'écho acoustique résultant du couplage entre le microphone principal 11 et le haut-parleur 15.

On va considérer le signal $x_i(t)$ à la sortie du microphone principal 11, celui qui est le plus éloigné du haut-parleur 15, $x_2(t)$ le signal à la sortie du microphone 12, celui qui est donc le plus près, et $y(t)$ le signal à la sortie de l'unité de traitement 13 après traitement des deux signaux $x_i(t)$ et $x_2(t)$.

L'unité de traitement 13 opère un traitement des deux signaux $x_i(t)$ et $x_2(t_2)$ respectivement issus des microphones 11 et 12 consistant à appliquer au signal issu du microphone 12 un coefficient multiplicateur égal à l'inverse de son atténuation $\alpha_e$ par rapport à celui issu du micorphone 11 et un retard égal au retard du signal d'écho $t_e$ par rapport au micorophone 11 et sommer avec le signal issu du microphone 11. On a donc :

$$y(t) = x_1(t) + {}^1/_{\alpha_e} \cdot x_2(t - t_e) \qquad Equation\ 1$$

On va également considérer, pour un souci de simplification du modèle, que la propagation est en champ libre. Si de plus, on néglige le bruit de fond dans la pièce où se trouve ledit terminal 10 ainsi que le bruit électronique des microphones 11 et 12 et du haut-parleur 15, on peut écrire la relation suivante en ce qui concerne le microphone 11 :

$$x_1(t) = s(t) + e(t) \qquad Equation\ 2$$

où $s(t)$ et le signal issu de la source sonore $S$ ($s(t)$ correspond par ailleurs au signal utile) et $e(t)$ est le signal dit d'écho issu du haut-parleur 15.
En ce qui concerne le microphone 12, le signal issu de la source S est, par rapport à celui reçu par le microphone 11, atténué d'un coefficient $\alpha_s$ et retardé d'un temps $t_s$. Quant au signal d'écho issu du haut parleur 15, il est atténué d'un coefficient $\alpha_e$ et en avance de phase par rapport au signal reçu par le microphone 11 du temps $t_e$. On peut donc écrire :

$$x_2(t) = \alpha_s\ s(t - t_s) + \alpha_e\ e(t + t_e) \qquad Equation\ 3$$

Pour les besoins de la démonstration, on va supposer que la source S est relativement éloignée des microphones 11 et 12. Il s'ensuit que les amplitudes du signal utile sur les deux microphones 11 et 12 sont sensiblement identiques ($\alpha_s \cong 1$).
On rappelle que le microphone 12 est avantageusement plus proche du haut-parleur 15 que le microphone 11. Il en résulte que l'amplitude du signal d'écho sur le microphone 12 est supérieure à celle sur le microphone 11 et que le coefficient $\alpha_e$ est supérieur à 1.
Le signal en sortie de l'unité de traitement 13 peut donc s'écrire :

$$y(t) = x_1(t) - \frac{1}{\alpha_e}\ x_2\ (t - t_e) = s(t) - \frac{1}{\alpha_e}\ s(t - t_s - t_e) \qquad Equation\ 4$$

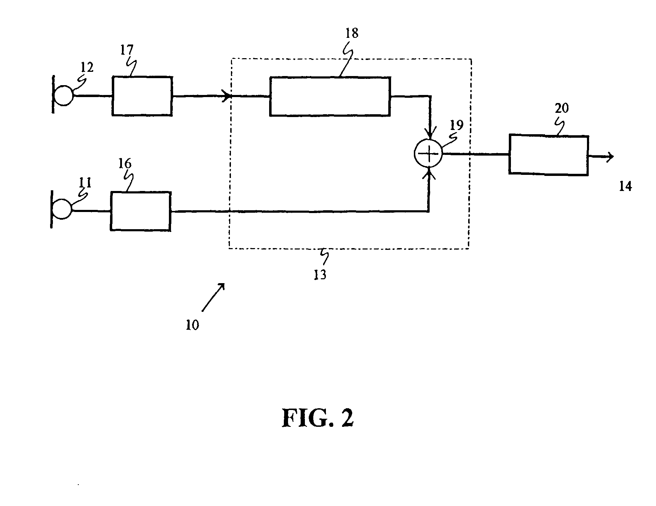

Du fait que le coefficient $\alpha_e$ est supérieur à un, le signal à la sortie de l'unité 13 est proche du signal utile $s(t)$.
On notera également qu'il en serait de même si la différence de retard $t_e$ sur les microphones 11 et 12 du signal d'écho est sensiblement égal à la différence de retard $t_s$ sur les microphones 11 et 12 de la source S.
On décrit maintenant un second mode de réalisation d'un moyen de captage de son 10 selon l'invention en relation avec la Fig. 2 qui en est un schéma synoptique comportant les mêmes éléments que ceux du système représenté à la Fig. 1. Chaque microphone 11, 12 est relié à l'entrée d'un convertisseur analogique/numérique 16, 17. Le signal numérique issu du convertisseur 17 est délivré à l'entrée d'un filtre 18 dont la réponse impulsionnelle est décrite par une fonction $g(t)$. Les signaux issus, d'une part, du convertisseur 16 et, d'autre part, du filtre 18 sont délivrés sur l'entrée d'un sommateur 19 dont la sortie est reliée à l'entrée d'un convertisseur numérique/analogique 20. Le signal à la sortie du convertisseur 20 est délivré à l'unité d'application 14. On notera que l'unité 13 incorpore ici les fonctions du filtre 18 ainsi que celle du sommateur 19.
On comprendra que si l'on dispose de microphones 11 et 12 qui délivrent directement des signaux numériques ou que, à l'inverse, si l'on dispose d'un filtre 18 à fonctionnement analogique, les convertisseurs 16, 17 et 20 ne sont pas nécessaires.
On va décrire le fonctionnement de ce mode de réalisation. Mais au préalable, on va appeler $h_1(t)$ et $h_2(t)$ les réponses impulsionnelles des microphones 11 et 12 respectivement concernant le signal issu du haut-parleur 15. Le filtre 18 effectue un traitement consistant à n'appliquer qu'au seul signal issu du microphone 12 un traitement qui peut être représenté par la fonction $g(t)$. Par ailleurs, le sommateur 19 délivre un signal $y(t)$ qui peut s'écrire de la manière suivante :

$$y(t) = x_1(t) + g(t) * x_2(t) \qquad \textit{Equation 5}$$

On a pu montrer que l'écho est considérablement réduit si la fonction $g(t)$ qui définit le traitement effectué par le filtre 18 est telle qu'elle est une solution de l'équation suivante :

$$h_1(t) + g(t) * h_2(t) = 0 \qquad \textit{Equation 6}$$

Le signal délivré par le microphone 11 peut s'écrire sous la forme :

$$x_1(t) = s(t) + h_1(t) * e(t) \qquad \textit{Equation 7}$$

où comme précédemment $s(t)$ est le signal reçu de la source S (aussi signal utile), $e(t)$ est le signal reçu du haut-parleur 15 et le signe * représente l'opération de convolution.

Quant au signal délivré par le microphone 12, il peut s'écrire :

$$x_2(t) = u(t) * s(t) + h_2(t) * e(t) \qquad \textit{Equation 8}$$

où $u(t)$ est la réponse impulsionnelle du microphone 12 en ce qui concerne le signal issu de la source S.

On notera que la modélisation mathématique est plus réaliste que la précédente dans la mesure où cette dernière était faite en supposant que le signal d'écho $e(t)$ était uniquement retardé et affaibli, ce qui aurait été le cas dans un contexte de propagation libre avec un haut-parleur 15 présentant des caractéristiques idéales (omnidirectionnel, etc.). Ces hypothèses ne sont pas formulées ici.

On peut montrer que, compte tenu des équations 5 à 8 ci-dessus, le signal en sortie de l'unité de traitement 13 peut s'écrire :

$$y(t) \approx [\delta(t) + g(t) * u(t)] * s(t) \qquad \textit{Equation 9}$$

où $\delta(t)$ représente l'impulsion de Dirac.

On peut constater que, d'après cette équation, l'écho est annulé. Plus particulièrement, le signal utile $s(t)$ est peu distordu si $g(t) * u(t)$ est petit comparé à l'impulsion de Dirac $\delta(t)$. Ceci est d'autant plus le cas si l'écho est plus fort sur le microphone 12 que sur le microphone 11, si notamment le microphone 12 est plus proche du haut-parleur 15 que le microphone 11.

Pour résoudre l'équation 6 ci-dessus afin de déterminer la fonction $g(t)$, on peut soit utiliser des techniques non adaptatives comme la technique dite des moindres carrés, soit utiliser un algorithme adaptatif pour un traitement qui s'adapte au cours du temps.

On a cependant pu montrer qu'un traitement fixe peut s'avérer suffisant dans la majorité des applications, ce qui présente l'avantage de constituer une solution économique.

On peut donc procéder de la manière suivante :

1) on effectue des mesures de réponse impulsionnelle des microphones 11 et 12 à un signal émis par le haut-parleur 15, et ce dans la configuration géométrique du terminal 10. Cette opération a pour but de calculer par la suite les réponses impulsionnelles $h_1(t)$ et $h_2(t)$.

2) on résout alors l'équation ci-dessus par une méthode de déconvolution afin de déterminer la fonction $g(t)$, que l'on implémente dans l'unité 14.

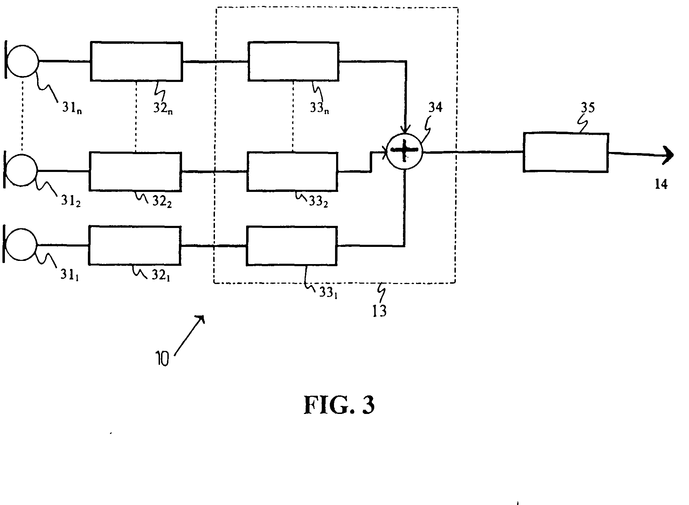

On a représenté à la Fig. 3 un autre mode de réalisation d'un moyen de captage 10 d'un système de captage et restitution selon la présente invention. Dans ce mode de réalisation, l'appareil 30 comporte n microphones $31_1$ à $31_n$ respectivement reliés à des convertisseurs analogiques/numériques $32_1$ à $32_n$. Les sorties respectives des convertisseurs $32_1$ à $32_n$ sont respectivement reliées aux entrées de filtres $33_1$ à $33_n$ dont les sorties sont reliées à des entrées d'un sommateur 34 lui-même relié à l'entrée d'un convertisseur numérique/analogique 35. La sortie de ce convertisseur 35 est reliée à l'entrée d'une unité téléphonique 14 (identique à celle du premier mode de réalisation) dont une sortie est reliée à un haut-parleur 15.

Les microphones $31_1$ à $31_n$ sont à des distances différentes du haut-parleur 15 et, avantageusement, pour tenir compte du fait que le haut-parleur 15 n'est pas nécessairement idéal, notamment omnidirectionnel, sont placés autour du haut-parleur 15.

On comprendra que si l'on dispose de microphones numériques ou que, à l'inverse, si l'on dispose de filtres analogiques, les convertisseurs $32_2$ à $32_n$ et 35 ne sont pas nécessaires.

La réponse impulsionnelle aux signaux délivrés par le haut-parleur 36 de chaque microphone $31_i$ est $h_i(t)$ ($i$ variant de 1 à **n**) et est soit prédéterminée par la géométire (retard, affaiblissement), soit mesurée une fois pour toutes, soit estimée par un algorithme adaptatif

Si on appelle $g_i(t)$ la fonction correspondant à la réponse impulsionnelle de chaque filtre 33; (i variant de 1 à **n**), celle-ci devra être une solution de l'équation suivante :

$$\sum_i \left[ h_i(t) * g_i(t) \right] \approx 0 \qquad \qquad Equation\ 10$$

Selon un mode de réalisation préférentielle, à l'instar du premier mode de réalisation représenté à la Fig. 2, un des filtres, par exemple le filtre $33_1$, est de longueur l si bien qu'il se réduit à une multiplication. Ceci permet d'économiser un filtre, donc de réduire la charge de calcul.

Dans un mode de réalisation simplifié à plusieurs capteurs, ladite unité de traitement 13 opère une combinaison des signaux respectivement issus des capteurs de son, chaque signal issu d'un capteur étant avancé d'une durée correspondant au temps de propagation dudit signal d'écho issu dudit moyen de restitution entre ledit capteur et un capteur de référence, qui peut-être choisi arbitrairement, par exemple le capteur $31_1$ à la Fig. 3.

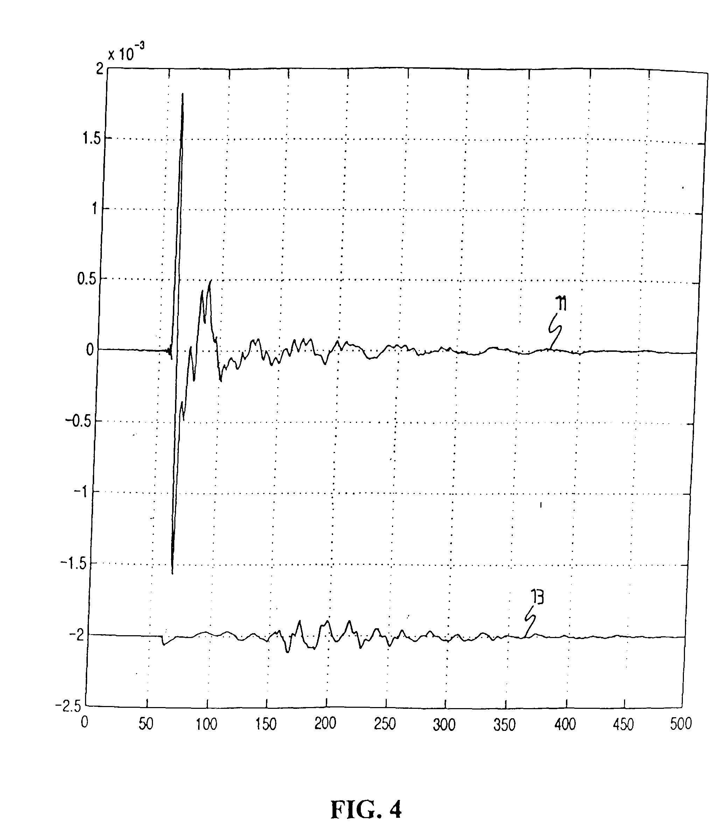

La courbe de la Fig. 4 représente, dans le cas d'un appareil à deux microphones tel que celui qui est représenté à la Fig. 1, la réponse impulsionnelle du microphone 11 (courbe supérieure) et la réponse impulsionnelle totale à l'issu du traitement opéré par l'unité de traitement 13 (courbe inférieure) en fonction du temps et ce dans le cas de la prise de son mains libres d'un système 100 à deux microphones 11 et 12 présentant les caractéristiques ci-dessus.

On remarque donc que l'effet de la réduction du couplage porte sur la première partie de la réponse impulsionnelle, qui correspond au trajet direct haut-parleur - microphones.

On notera que, dans le cas d'un traitement non adaptatif, il est quasi-impossible de corriger toute la réponse dont la queue varie au cours du temps.

Dans la réalisation qui a conduit au tracé des courbes de la Fig. 4, le filtre associé au microphone 12 présentait 100 coefficients.

## Revendications

**1.** Système de captage et restitution du son du type comportant un moyen de captage du son et un moyen de restitution du son (15) relié à une sortie d'une unité d'application (14) à laquelle est appliqué ledit signal issu dudit moyen de captage à des fins notamment de restitution par ledit moyen de restitution (15), ledit système étant prévu pour réduire l'écho résultant du couplage acoustique entre ledit moyen de captage du son et ledit moyen de restitution, ledit moyen de captage du son étant constitué d'au moins deux capteurs de son (11, 12, $31_1$ à $31_n$) situés à des distances différentes dudit moyen de restitution (15) et d'une unité de traitement (13) prévue pour traiter les signaux issus de chaque capteur de son (11, 12, $33_1$ à $33_n$) afin de délivrer un signal à ladite unité d'application (14) dont le signal d'écho est réduit, caractérisé en ce que ladite unité de traitement (13) est prévue pour exploiter l'amplitude et la phase de chacun des signaux issus de chaque capteur de son (11, 12, $33_1$ à $33_n$).

**2.** Système de captage et restitution du son selon la revendication 1, caractérisé en ce que ladite unité de traitement (13) effectue un filtrage du signal issu de chaque capteur (11, 12, $31_1$ à $31_n$) puis une sommation des signaux ainsi filtrés, la réponse impulsionnelle de chaque filtrage associé à un capteur (11, 12, $31_1$ à $31_n$) étant définie par une fonction $g_i(t)$ qui est une solution de l'équation suivante :

$$\sum_i \left[ h_i(t) * g_i(t) \right] \approx 0 \ \text{pour i variant de 1 à } \mathbf{n}$$

où $h_i(t)$ (i variant de 1 à **n**) est la réponse impulsionnelle de chaque capteur (11, 12, $31_1$ à $31_n$) aux signaux délivrés par ledit moyen de restitution (15).

**3.** Système de captage et restitution du son selon la revendication 2, caractérisé en ce que chaque fonction $g_i(t)$ est déterminée par résolution de ladite équation au moyen d'un algorithme adaptatif.

**4.** Système de captage et restitution du son selon la revendication 2, caractérisé en ce que chaque fonction $g_i(t)$ est déterminée par résolution de ladite équation au moyen d'un algorithme des moindres carrés.

**5.** Système de captage et restitution du son selon une des revendications 2 à 4, caractérisé en ce que la réponse impulsionnelle de chaque capteur ($11$, $12$, $31_1$ à $31_n$) aux signaux délivrés par ledit moyen de restitution ($15$) est déterminée par mesure de la réponse dudit capteur ($11$, $12$, $31_1$ à $31_n$) à des signaux émis par ledit moyen de restitution ($15$).

**6.** Système de captage et restitution du son selon une des revendications précédentes, caractérisé en ce que le filtrage associé au capteur ($11$) le plus éloigné du moyen de restitution ($15$) est défini par une fonction multiplication.

**FIG. 1**

**FIG. 2**

**FIG. 3**

**FIG. 4**

**Office européen des brevets**

# RAPPORT DE RECHERCHE EUROPEENNE

Numéro de la demande

EP 99 40 2636

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 5 796 819 A (ROMESBURG ERIC DOUGLAS) 18 août 1998 (1998-08-18) * colonne 5, ligne 4 - ligne 52 * * colonne 7, ligne 34 - ligne 48 * * colonne 10, ligne 46 - ligne 61; figure 3 * | 1-6 | H04M9/08 |
| X | PATENT ABSTRACTS OF JAPAN vol. 013, no. 186 (E-752), 2 mai 1989 (1989-05-02) & JP 01 012648 A (NIPPON TELEGR & TELEPH CORP), 17 janvier 1989 (1989-01-17) * abrégé * | 1-3,5 | |
| X | PATENT ABSTRACTS OF JAPAN vol. 013, no. 216 (E-760), 19 mai 1989 (1989-05-19) & JP 01 029096 A (NIPPON TELEGR & TELEPH CORP ;OTHERS: 01), 31 janvier 1989 (1989-01-31) * abrégé * | 1-3 | |
| | | | DOMAINES TECHNIQUES RECHERCHES (Int.Cl.7) |
| A | US 5 121 426 A (BAUMHAUER JR JOHN C ET AL) 9 juin 1992 (1992-06-09) * colonne 3, ligne 51 - colonne 4, ligne 2 * * colonne 8, ligne 42 - colonne 9, ligne 7 * * colonne 9, ligne 36 - ligne 68 * | 1 | H04M |
| A | US 5 323 458 A (PARK SANGIL ET AL) 21 juin 1994 (1994-06-21) * colonne 2, ligne 52 - colonne 3, ligne 5 * | 1 | |

Le présent rapport a été établi pour toutes les revendications

| Lieu de la recherche | Date d'achèvement de la recherche | Examinateur |
|---|---|---|
| LA HAYE | 24 janvier 2000 | Vaucois, X |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 99 40 2636

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-01-2000

| Document brevet cité au rapport de recherche | | Date de publication | Membre(s) de la famille de brevet(s) | | Date de publication |
|---|---|---|---|---|---|
| US 5796819 | A | 18-08-1998 | AU | 3734297 A | 10-02-1998 |
| | | | CN | 1226349 A | 18-08-1999 |
| | | | EP | 0914721 A | 12-05-1999 |
| | | | PL | 331238 A | 05-07-1999 |
| | | | WO | 9804079 A | 29-01-1998 |
| JP 01012648 | A | 17-01-1989 | AUCUN | | |
| JP 01029096 | A | 31-01-1989 | JP | 2509629 B | 26-06-1996 |
| US 5121426 | A | 09-06-1992 | CA | 2027138 C | 16-08-1994 |
| | | | CA | 2027138 A | 23-06-1991 |
| | | | JP | 2045159 C | 09-04-1996 |
| | | | JP | 3293846 A | 25-12-1991 |
| | | | JP | 7061098 B | 28-06-1995 |
| | | | KR | 9406002 B | 30-06-1994 |
| US 5323458 | A | 21-06-1994 | AUCUN | | |

EPO FORM P0460

Pour tout renseignement concernant cette annexe : voir Journal Officiel de l'Office européen des brevets, No.12/82